# EUROPÄISCHE PATENTSCHRIFT

(11) **EP 1 277 505 B1**
(45) Veröffentlichungstag und Bekanntmachung des Hinweises auf die Patenterteilung: **11.03.2009**
(21) Anmeldenummer: 02014932.4
(22) Anmeldetag: 08.07.2002
(51) Int. Cl.: B01D 29/00, G01N 33/569

(54) **Vorrichtung, Verfahren und Durchflussanalysensystem zum Erfassen immunogener Partikel**
Apparatus, method and flux-analysis system for capturing immunogenic particles
Appareil, procédé et système d'analyse de flux pour capter des particules immunogènes

(30) Priorität: 18.07.2001 DE 10134860
(43) Veröffentlichungstag der Anmeldung: 22.01.2003
(73) Patentinhaber: Fraunhofer-Gesellschaft zur Förderung der angewandten Forschung e.V., 80686 München (DE)
(72) Erfinder: Yacoub-George, Erwin, Dr., 81929 München (DE); Meixner, Leonhard, 81243 München (DE); Scheithauer, Waltraud, 81737 München (DE)
(74) Vertreter: Grünecker, Kinkeldey, Stockmair & Schwanhäusser Anwaltssozietät

(56) Entgegenhaltungen:
- US-A- 6 130 097
- PAFFARD SEAN M ET AL: "Amplified enzyme-linked-immunofilter assays enable detection of 50-10-5 bacterial cells within 1 hour." ANALYTICAL BIOCHEMISTRY, Bd. 248, Nr. 2, 1997, Seiten 265-268, XP002218430 ISSN: 0003-2697
- KOCH SABINE ET AL: "Optical flow-cell multichannel immunosensor for the detection of biological warfare agents." BIOSENSORS & BIOELECTRONICS., Bd. 14, Nr. 10-11, Januar 2000 (2000-01), Seiten 779-784, XP002218431 ISSN: 0956-5663
- YACOUB-GEORGE ERWIN ET AL: "Chemiluminescence multichannel immunosensor for biodetection." ANALYTICA CHIMICA ACTA, Bd. 457, Nr. 1, 2002, Seiten 3-12, XP002218432 15 April, 2002 ISSN: 0003-2670
- ABDEL-HAMID IHAB; IVNITSKI DMITRI; ATANASOV PLAMEN; WILKINS EBTISAM: "Highly sensitive flow-injection immunoassay system for rapid detection of bacteria" ANALYTICA CHIMICA ACTA, Bd. 399, Nr. 1-2, 8. November 1999 (1999-11-08), Seiten 99-108, XP001069564 ISSN: 0003-2670
- UITHOVEN K A; SCHMIDT J C; BALLMAN M E: "Rapid identification of biological warfare agents using an instrument employing a light addressable potentiometric sensor and a flow-through immunofiltration-enzyme assay system" BIOSENSORS & BIOELECTRONICS, Bd. 14, Nr. 10-11, Januar 2000 (2000-01), Seiten 761-770, XP007900603 England ISSN: 0956-5663

## Beschreibung

Die vorliegende Erfindung bezieht sich auf eine Vorrichtung, ein Verfahren und ein Durchflussanalysensystem zum Erfassen immunogener Partikel nach dem Oberbegriff des Patentanspruchs 1.

Immunogene Partikel, wie beispielsweise Bakterien, mit einem Durchmesser > 0,2 µm müssen für viele Anwendungsgebiete in Gasen oder Flüssigkeiten, im folgenden als Fluid bezeichnet, mit hoher Empfindlichkeit unabhängig von einem Laboratorium, d. h. vor Ort, automatisiert nachgewiesen werden. Wesentliche Einsatzgebiete für den Nachweis immunogener Partikel sind die Trink-, Brauch- und Abwasseranalytik, die Lebensmittelanalytik, die medizinische Diagnostik, die Detektion biologischer Kampfstoffe und verwandte Gebiete, in denen mikrobiologische Analysen durchgeführt werden.

Immunologische Verfahren sind zur Detektion und Identifizierung von immunogenen Partikeln, wie beispielsweise Bakterien, grundsätzlich gut geeignet und weit verbreitet. Sie basieren auf der hochspezifischen Antigen-Antikörper-Reaktion und bieten die Möglichkeit, die gesuchten immunogenen Partikel rasch und spezifisch nachzuweisen. Da die Sensitivität üblicher immunologischer Verfahren für viele mikrobiologische Anwendungen, wie beispielsweise der Trinkwasseranalytik, nicht ausreicht, ist hier meist ein vorgeschaltetes Anreicherungsverfahren zwingend erforderlich. Eine solche Anreicherung von Bakterien kann in herkömmlicher Weise durch Membranfiltration, bei der die Porengröße des Filters kleiner ist als der Durchmesser der immunogenen Partikel, und/oder durch kulturelle Vermehrung erreicht werden. Im Vergleich zu den klassischen mikrobiologischen Kultur- und Identifizierungsverfahren lässt sich durch die Verwendung immunologischer Verfahren die Anreichungszeit stark verkürzen, da keine visuell sichtbaren Reaktionen abgewartet werden müssen.

Die Firma Riedel-de Haën bietet einen immunologischen Mikrotiterplatten-Test für Enterobacteriaceae (ECA) in Trinkwasser an, dem ein 16- bis 20-stündiges kulturelles Anreicherungsverfahren vorgeschaltet ist. Der Test basiert auf einem Sandwich-ELISA, bei dem Fänger- und Detektorantikörper identisch sind. Ferner bietet die Firma Riedel-de Haën einen Legionellen-Test an, bei dem die Wasserproben membranfiltriert und auf einem legionellen-selektiven Nährboden ausgestrichen werden. Die nach mehreren Tagen gewachsenen Kolonien werden auf einen Nitrocellulosefilter überführt und mit Peroxidase-markierten monoklonalen Antikörpern versetzt. Legionellen-Kolonien auf dem Nitrocellulosefilter färben sich durch das Reaktionsprodukt des Marker-Enzyms blau und können so durch geschultes Laborpersonal visuell identifiziert werden.

Neben diesen kommerziellen Tests wird in der Literatur, siehe z. B. Abdel-Hamid, I., et al. Analytica Chimica Acta 399 (1999) 99-108, das Prinzip der sogenannten Immunfiltration zum immunologischen Nachweis von Bakterien beschrieben. Bei der Immunfiltration wird ein großporiger Filter, bei dem der Porendurchmesser größer ist als der Durchmesser der gesuchten immunogenen Partikel, anstelle einer Mikrotiterplatte als Trägermaterial für einen Sandwich-lmmunoassay verwendet. Die spezifischen Fang-Antikörper sind in den Poren des Filters immobilisiert. Die Detektion der Bakterien erfolgt anschließend über einen enzymmarkierten Detektions-Antikörper. Das beschriebene Immunfiltrationsverfahren zum Nachweis von Bakterien arbeitet im Durchfluss und die in den Poren des Filters umgesetzte Substratlösung wird nach ihrem Durchtritt durch den Filter mit Hilfe einer elektrochemischen Meßmethode in einer speziellen nachgeschalteten Messkammer bezüglich des Substratumsatzes quantifiziert.

Ein wesentlicher Nachteil der kommerziellen Tests besteht darin, dass die Anreicherung und der immunologische Nachweis von Bakterien nur in einem Laboratorium durchgeführt werden können, da mehrere komplexe Arbeitsschritte von geschultem Personal sequentiell durchgeführt werden müssen. Der Zeit- und Personalaufwand für einen solchen Test ist damit verhältnismäßig hoch. Ein automatisierter Vorortnachweis lässt sich mit solchen Tests nicht durchführen.

Dagegen weist die Immunfiltration den Nachteil auf, dass zusätzliche Fang-Antikörper auf dem Filtermaterial benötigt werden. Eine aufwendige Immobilisierung dieser Fang-Antikörper auf dem Filtermaterial ist deshalb erforderlich und es muss, falls die Präparation dieser Filter nicht unmittelbar vor ihrem Einsatz erfolgt, sichergestellt werden, dass die immobilisierten Antikörper bis zu ihrem Einsatz ihre Affinität behalten. Da die Bindung der immunogenen Partikel an die Antikörper auf dem Filtermaterial ein Reaktionsgleichgewicht besitzt, wird außerdem ein Teil der gesuchten Bakterien während des Inkubationsschrittes durch die Poren des Filters, deren Durchmesser größer ist als der Durchmesser der Partikel, gespült und trägt somit nicht zum Messsignal bei. Ein weiterer Nachteil der Immunfiltration besteht darin, dass der Immuntest nicht direkt auf der Filteroberfläche, sondern in den Filterporen durchgeführt wird. Die Auswertung der umgesetzten Substratlösung muss deshalb immer in einer nachgeschalteten Messkammer erfolgen. Ein zusätzlicher Transportschritt vom Filter zur Messkammer wird erforderlich, der sowohl die Analysezeit verlängert, als auch zu einer Verdünnung der umgesetzten Substratlösung und damit zu einer Verringerung der Sensitivität führt.

Aus KOCH SABINE ET AL: "Optical flow-cell multichannel immunosensor for the detection of biological warfare agents. "BIOSENSORS & BIOELECTRONICS., Bd. 14, Nr. 10.11, Januar 2000 (2000-01), Seiten 779-784, ist ein optischer Durchfluss-Mehrkanalimmunosensor zur Detektion von biologischen Agenzien bekannt. Die Proben werden dabei mittels eines parallel durchgeführten Kapillar-Immunoassays auf optischer Basis auf verschiedene biologische Agenzien getestet. Eine Anreicherung der Bakterien ist in diesem Assay jedoch nicht vorgesehen.

Aus der Veröffentlichung UITHOVEN K A; SCHMIDT J C; BALLMAN M E: "Rapid identification of biological warfare agents using an instrument employing a light addressable potentiometric sensor and a flow-through immunofiltration-enzyme assay system" BIOSENSORS & BIOELECTRONICS, Bd. 14, Nr. 10-11, Januar 2000 (2000-01), Seiten 761-770, ist ein Durchflussimmunofiltrationsassaysystem bekannt, bei dem ein separater optischer Assay unter Verwendung eines Reader zur Detektion der angereicherten Keime in einer Nitrozellulose-Membran vorgesehen ist. Die Verbindung zwischen dem Anreicherungsteil des Systems und dem Detektionsteil geschieht über eine Transportvorrichtung, die ein Nitrozelluloseband von der Anreicherungsvorrichtung in den Reader bewegt.

In ABDEL-HAMID IHAB; IVNITSKI DMITRI; ATANASOV PLAMEN; WILKINS EBTISAM: "Highly sensitive flow-injection immunoassay system for rapid detection of bacteria" ANALYTICA CHIMICA ACTA, Bd. 399, Nr. 1-2, 8. November 1999, Seiten 99-108, wird eine Vorrichtung beschrieben die eine Filtrationsmesszelle und ein Sensorelement beinhaltet. Die Filtrationsmesszelle ist zumindest teilweise für das Signal durchlässig und das Sensorelement ist so angeordnet, dass es sich nahe dem Filterteil befindet und das erzeugte Signal empfängt.

Die detektierende Elektrode, welche die Reaktionsprodukte des Filtrationsprozesses nachweist, befindet sich dabei in unmittelbarer Nähe der Immunfiltrationsmembran Die Vorrichtung wird z.B. benutzt um Bakterien mittels Antikörpern zu detektieren. Der Nachweiss basiert auf einer amperometrischen Signalerzeugung.

Ausgehend von diesem Stand der Technik liegt der vorliegenden Erfindung die Aufgabe zugrunde, eine Vorrichtung und ein Verfahren zum Erfassen immunogener Partikel in einem Probenfluid anzugeben, welche eine genauere, schnellere und kostengünstigere Bestimmung immunogener Partikel auch außerhalb eines Laboratoriums erlaubt.

Diese Aufgabe wird durch eine Vorrichtung mit den Merkmalen des Anspruchs 1 sowie durch ein Verfahren mit den Merkmalen des Patentanspruchs 14 und 23 gelöst.

Der Erfindung liegt der Gedanke zugrunde, immunogene Partikel in einer Filtrationsmesszelle anzureichern und spezifisch durch die in einem Filtermaterial befindlichen immunogenen Partikel erzeugten Signale mit einem Sensorelement zu empfangen, das so angeordnet ist, dass es sich nahe dem Filterteil befindet.

Ein wesentlicher Vorteil der erfindungsgemäßen Vorrichtung besteht darin, dass immunogene Partikel, wie beispielsweise Bakterien mit hoher Empfindlichkeit und unabhängig von einem Laboratorium, d. h. vor Ort, automatisiert nachgewiesen werden können. Die mit dieser Vorrichtung erreichten Nachweisgrenzen liegen bei Bakterien aufgrund des integrierten Anreicherungsschritts wesentlich unter denen herkömmlicher Immuntests. Die Zeit für einen Test kann gegenüber herkömmlichen Immuntests zum Teil wesentlich reduziert werden. Die unspezifische Anreicherung der immunogenen Partikel und der spezifische immunologische Nachweis der immunogenen Partikel finden beide auf der Oberfläche des Filters statt. Ein manueller Transfer der immunogenen Partikel vom Filter auf einen anderen Träger ist nicht mehr erforderlich. Durch den immunologischen Nachweis der immunogenen Partikel direkt auf der Filteroberfläche wird der Einsatz sehr empfindlicher optischer Messmethoden ermöglicht.

Bei dem in Anwesenheit immunogenes Partikel erzeugten Signal handelt es sich um eine Lichtstrahlung und die Filtrationsmesszelle ist zumindest teilweise lichtdurchlässig. Es handelt sich hierbei um eine sehr weit verbreitete Möglichkeit der Signalgenerierung, für die sehr viele und gut charakterisierte Reagenzien und Sensorelemente zur Verfügung stehen. Das Ergebnis des Immuntests kann direkt am Reaktionsort detektiert werden, da das auf der Filteroberfläche erzeugte Licht in alle Richtungen des Raumes abstrahlt. Der Fotodetektor bzw. der Fluoreszenz-Messkopf kann daher direkt gegenüber der Filterfläche angeordnet werden. Eine zwingende Trennung von Reaktionsort und Detektionsort und ein damit verbundener Transportschritt, wie er z. B. bei der Immunfiltration aufgrund der Substratumsetzung in den Poren erforderlich ist, entfällt.

Die automatisierte Erfassung der Lichtstrahlung wird durch einen Fotodetektor als Sensorelement ermöglicht. Solche Fotodetektoren sind beispielsweise Fotodioden, Avalanche-Dioden, Fotomultiplier oder CCDs.

Wird die Porengröße des Filterteils kleiner als der Durchmesser der nachzuweisenden immunogenen Partikel gewählt, so kann die Anreicherung der immunogenen Partikel unspezifisch allein aufgrund ihrer Größe auf dem Filter erfolgen (Oberflächenfiltration) und eine Beschichtung des Filterteils mit einem zusätzlichen Fang-Antikörper ist nicht mehr nötig. Als Filterteil werden bevorzugt Rundfilter mit einem Porendurchmesser von 0,2 µm aus Polycarbonat, Nitrocellulose, PVDF, Nylon oder modifiziertem Nylon eingesetzt.

Eine strömungsmechanisch und fertigungstechnisch besonders günstige Form für die Filtrationsmesszelle ist eine im wesentlichen zylindrische Gestalt.

Gemäß einer bevorzugten Ausführungsform weist die Filtrationsmesszelle ein Bodenteil, ein Deckelteil und eine sich im wesentlichen senkrecht zwischen dem Bodenteil und dem Deckelteil erstreckende Wandung auf. Dies hat den Vorteil einer besonders einfachen Herstellung. Das Filterteil liegt auf dem Bodenteil auf und befindet sich damit zwischen Bodenteil und Deckelteil.

Die Anzahl der Teile kann reduziert werden, indem Deckelteil und Wandung einstückig ausgeführt sind. Soll eine Durchlässigkeit der Filtrationsmesszelle für Lichtstrahlung erreicht werden, stellt eine zumindest teilweise Herstellung der Filtrationsmesszelle aus Acrylglas (Polymethylmethacrylat, PMMA) eine besonders einfache und kostengünstige Variante dar. Daneben können auch Materialien wie Polystyrol oder Polycarbonat verwendet werden.

Sieht man in der Filtrationsmesszelle mindestens einen Fluid-Ein- und/oder Auslass vor, so kann die Filtrationsmesszelle in einem automatisierten Durchflussanalysensystem betrieben werden.

Ordnet man insbesondere den Fluid-Ein- und/oder Auslass so an, dass das Fluid im wesentlichen tangential an der Filterteiloberfläche vorbeiströmen kann, wird erreicht, dass die Messkammer blasenfrei mit Flüssigkeit gefüllt werden kann und dass Luftblasen, die sich bereits in der Zelle gesammelt haben, entfernt werden können. Ferner erlaubt dieser Fluidweg, das Flüssigkeitsvolumen in der Messkammer in kurzer Zeit vollständig auszutauschen und damit die Spülzeiten wesentlich zu verkürzen.

Ein Fluid-Auslass, der so unter dem Filterteil angeordnet ist, dass das Fluid im wesentlichen senkrecht durch das Filterteil hindurchströmt, gewährleistet eine strömungsmechanisch optimale Fluidführung für die Anreicherung der immunogenen Partikel auf der Filteroberfläche.

Eine konstruktiv besonders einfache Lösung für die Halterung des Filterteils ist die Ausbildung des Bodenteils durch eine in einem Gehäuse gehaltene Filterfritte.

Für die meisten analytischen Anwendungen eines Nachweises immunogener Partikel besteht das Probenfluid aus einer wässrigen Lösung. Grundsätzlich ist jedoch auch denkbar, immunogene Partikel aus einem Gasstrom in dem Filterteil anzureichern. Ein solches gasförmiges Probenfluid tritt beispielsweise bei einer Überwachung von Gasströmen in Klimaanlagen auf.

Anhand der in den beiliegenden Zeichnungen dargestellten bevorzugten Ausgestaltungen wird die Erfindung im folgenden näher erläutert. Ähnliche oder korrespondierende Einzelheiten der erfindungsgemäßen Vorrichtung sind in den Figuren mit denselben Bezugszeichen versehen. Es zeigen:
- **Figur 1**: eine schematische Darstellung eines Durchflussanalysensystems mit einer erfindungsgemäßen Vorrichtung zum Erfassen immunogener Partikel in einem Probenfluid;
- **Figur 2**: eine Explosionsdarstellung der erfindungsgemäßen Vorrichtung;
- **Figur 3**: ein Flussdiagramm des Testablaufs gemäß einer bevorzugten Ausführungsform;
- **Figur 4**: ein Flussdiagramm eines Testablaufs gemäß einer weiteren bevorzugten Ausführungsform.

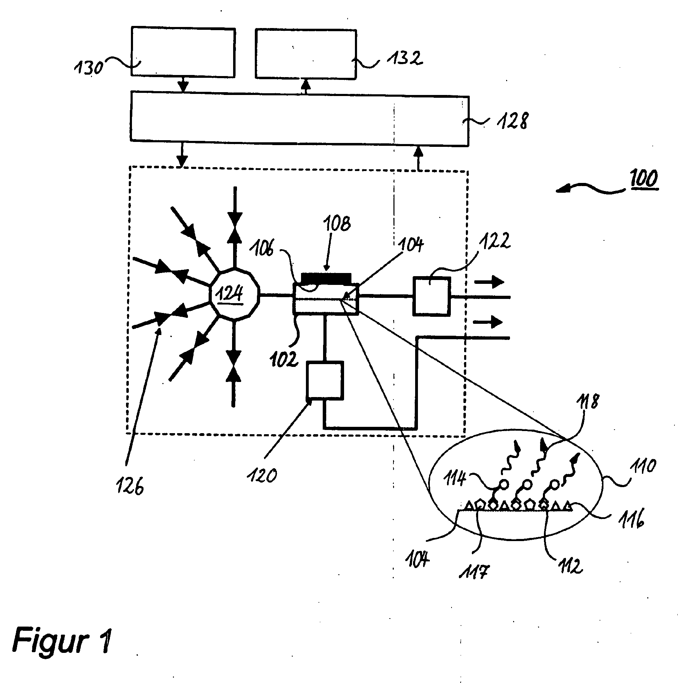

Figur 1 zeigt in schematischer Darstellung ein Durchflussanalysensystem 100 mit einer erfindungsgemäßen Filtrationsmesszelle 102 zum Erfassen immunogener Partikel in einem Probenfluid. Die Filtrationsmesszelle 102 weist in ihrem Inneren ein auswechselbares Filterteil 104 auf, das senkrecht zur Filterfläche durchströmt werden kann. Die Porengröße des Filterteils 104 ist kleiner als der Durchmesser der nachzuweisenden immunogenen Partikel, so dass diese sich in einem Anreicherungsschritt, bei dem das Probenfluid durch das Filterteil 104 hindurchgeleitet wird, auf der Oberfläche des Filterteils 104 als Filterkuchen ansammeln (man spricht hier von einer Oberflächenfiltration). Die Filtrationsmesszelle 102 ist so gestaltet, dass gegenüber der Oberfläche des Filterteils 104 ein lichtdurchlässiges Fenster 106 angeordnet ist. Filteroberfläche und Fenster 106 bilden somit Boden und Deckel der im wesentlichen zylinderförmigen Messzelle. Ein Fotodetektor 108 detektiert durch das lichtdurchlässige Fenster 106 hindurchtretendes Licht. Wie in der Ausschnittsvergrößerung 110 des Filterteils 104 schematisch dargestellt, erfolgt der immunologische Nachweis der immunogenen Partikel 112 nach dem Anreicherungsschritt direkt auf der Oberfläche des Filterteils 104. Hierzu wird ein für die nachzuweisenden immunogenen Partikel 112 spezifische Antikörper 114, an den ein (hier kreisförmig dargestelltes) Enzym, wie beispielsweise Meerrettich-Peroxidase, gekoppelt ist, durch den Filterkuchen und das Filterteil 104 geleitet. Der markierte Antikörper 114 bindet spezifisch nur an die nachzuweisenden immunogenen Partikel 112 auf der Oberfläche des Filterteils 104, nicht jedoch an die ggf. im Probenfluid ebenfalls vorhandenen unspezifischen Partikel 116 oder 117. Befinden sich keine passenden immunogenen Partikel 112 auf der Filteroberfläche, so durchströmen die Antikörper 114 (bis auf einen kleinen Anteil, der unspezifisch angelagert wird) ungehindert Filterkuchen und Filterteil 104. Nach einem Waschschritt wird eine geeignete Chemilumineszenz-Substratlösung in die Filtrationsmesszelle 102 geleitet. Der enzymmarkierte Antikörper 114, der an die immunogenen Partikel 112 gebunden ist, katalysiert die Umsetzung der Chemilumineszenz-Substratlösung. Bei dieser Reaktion entsteht Licht 118. Die Lichtintensität in der Filtrationsmesszelle 102 wird durch den hinter dem lichtdurchlässigen Fenster 106 befindlichen Fotodetektor 108 erfasst. Auf diese Weise können die auf der Filteroberfläche angereicherten immunogenen Partikel 112 spezifisch über die gemessene Lichtintensität quantifiziert werden und es kann damit auf die Konzentration der nachzuweisenden immunogenen Partikel 112 in dem Probenfluid geschlossen werden.

Zur Fluidförderung sind in dem hier gezeigten Durchflussanalysensystem 100 zwei Peristaltikpumpen 120 und 122 vorgesehen. Dabei dient die Pumpe 120 einer Fluidförderung senkrecht zu dem Filterteil 104, während die Pumpe 122 eine Förderung parallel zur Filteroberfläche ermöglicht. Der Fluidweg parallel zur Filteroberfläche dient im wesentlichen dazu, die Filtrationsmesszelle blasenfrei mit Flüssigkeit zu füllen, oder Luftblasen, die sich in der Filtrationsmesszelle 102 gesammelt haben, zu entfernen. Außerdem erlaubt dieser Fluidweg, das Flüssigkeitsvolumen in der Filtrationsmesszelle 102 in kurzer Zeit vollständig auszutauschen und damit die erforderlichen Spülzeiten wesentlich zu verkürzen.

Ein Fluidverteiler 124 ermöglicht in Kombination mit verschiedenen Ventilen 126 die automatisierte wahlweise Zuleitung verschiedener Fluide in die Filtrationsmesszelle 102.

Das Durchflussanalysensystem 100 umfasst ferner eine Messdatenauswertungseinrichtung und eine Systemsteuerungseinrichtung 128, die in Figur 1 als ein Block dargestellt sind. Hierbei bestimmt die Messdatenauswertungseinrichtung aus den erfassten Messwerten Konzentrationsangaben. Die Systemsteuerungseinrichtung steuert beispielsweise die Peristaltikpumpen 120, 122 und die Ventile 126 entsprechend einstellbarer Parameter, die von der Steuerungseinrichtung abgegeben werden. Das System umfasst ferner eine Dateneingabeeinrichtung 130 und eine Datenanzeigeeinrichtung 132. Die Dateneingabeeinrichtung 130 dient zur Eingabe von Steuerparametem durch einen Benutzer, wobei diese sowohl Parameter für die Systemsteuerungseinrichtung, wie auch Parameter für die Messdatenauswertungseinrichtung umfassen. Die Datenanzeigeeinrichtung 132 stellt sowohl die eingestellten Systemparameter als auch die erfassten und weiterverarbeiteten Messwerte dar.

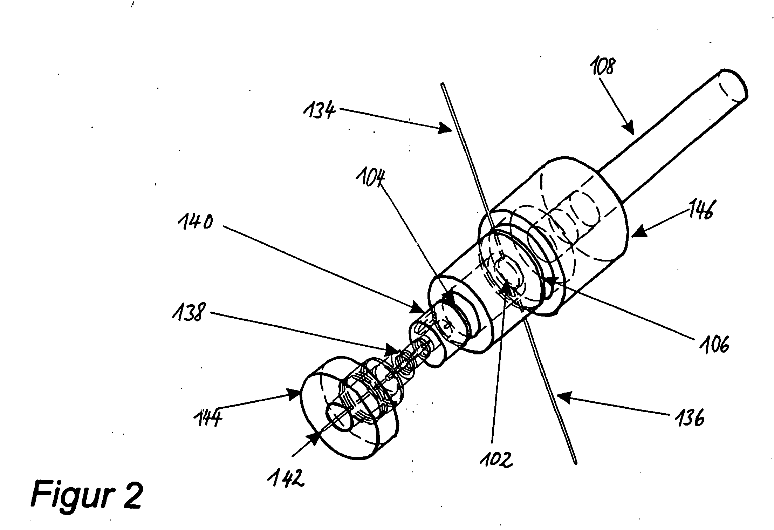

Figur 2 zeigt in einer bevorzugten Ausführungsform eine erfindungsgemäße Vorrichtung zum Erfassen immunogener Partikel, die in ein Durchflussanalysensystem integrierbar ist. Die zylinderförmige Filtrationsmesszelle 102, deren Wandung vorzugsweise aus Polyetheretherketon (PEEK) gefertigt ist, besitzt drei Fluidanschlüsse: zwei seitlich angebrachte Anschlüsse 134 und 136 dienen der Fluidförderung parallel zu dem Filterteil 104. In der hier gezeigten Darstellung sind die Fluidanschlüsse 134 und 136 durch Stahlkapillaren gebildet, die in entsprechende Öffnungen der Filtrationsmesszelle 102 eingepasst sind. Ein weiterer Fluidanschluss 138 ist an dem Bodenteil 140 der Filtrationsmesszelle 102 vorgesehen. Durch diesen Fluidanschluss 138 kann eine Fluidförderung senkrecht zum Filterteil 104 erfolgen. In der hier gezeigten Ausführungsform besteht das Bodenteil 140 der Filtrationsmesszelle 102 aus einem Stempel mit einer Filterfritte zur Aufnahme des Filterteils 104. Der Fluidanschluss 138 mündet in eine Teflonkapillare 142. Eine Andruckschraube 144 ermöglicht den raschen Austausch des Filterteils 104. Auf der dem Bodenteil 140 gegenüberliegenden Seite der Filtrationsmesszelle 102 ist als Deckelteil ein lichtdurchlässiges Fenster 106, das vorzugsweise aus Glas oder Kunststoff besteht, angeordnet. Als Fotodetektor 108, der durch das lichtdurchlässige Fenster 106 die von der Filteroberfläche ausgehende Strahlung detektiert, kann beispielsweise ein Fotomultiplier verwendet werden. Eine Detektorhalterung 146 dient der Fixierung des Detektors 108 an der Filtrationsmesszelle 102. Die Filtrationsmesszelle 102 ist so konstruiert, dass das Bodenteil 140 zum Wechseln des Filterteils 104 entfernt werden kann. Bei diesem Ausführungsbeispiel erfolgt die Befestigung des Bodenteils 140 über eine Schraubverbindung; alternativ kann auch ein Schnappverschluss oder ein Bajonettverschluss eingesetzt werden. Das automatische Wechseln des Filterteils 104 kann z. B. mit Hilfe eines Bandfilters erfolgen, der mit Hilfe eines Motors von einer Rolle ab- und auf eine zweite Rolle aufgespult und dabei durch das Innere der Filtrationsmesszelle gezogen wird. Auf diese Weise ließe sich ein *stand-alone*-Gerät zur kontinuierlichen Überwachung z. B. eines Wasserreservoirs realisieren.

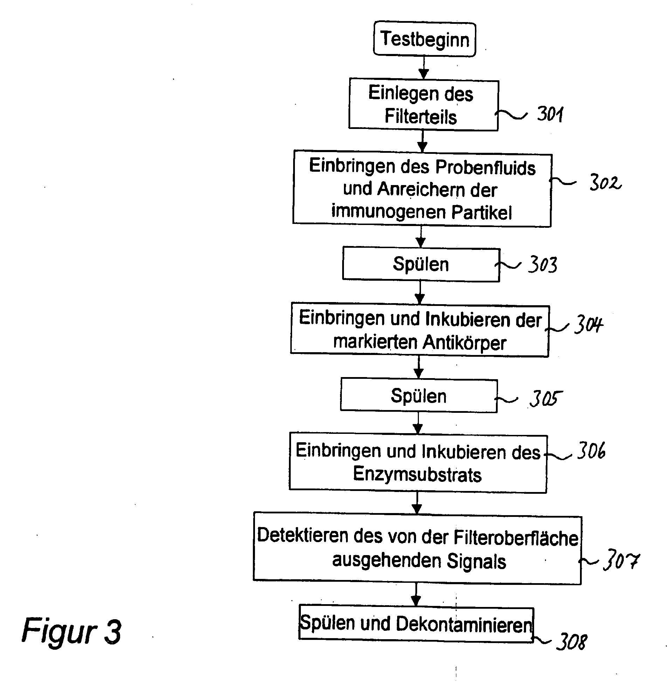

Figur 3 zeigt ein Flussdiagramm eines Testablaufs gemäß einer bevorzugten Ausführungsform. In einem ersten Schritt 301 wird zunächst ein frisches Filterteil eingelegt. Anschließend wird das Probenfluid in die Filtrationsmesszelle eingebracht und senkrecht zur Filteroberfläche gefördert, um immunogene Partikel anzureichern (Schritt 302). Ein anschließender Spülschritt (Schritt 303) entfernt alle nicht durch das Filterteil gehaltenen Komponenten aus der Filtrationsmesszelle. In Schritt 304 werden die enzymmarkierten Antikörper in die Filtrationszelle eingeleitet und inkubiert. Dabei binden die markierten Antikörper im wesentlichen nur an die gesuchten immunogenen Partikel. Nicht gebundene Artikel werden im Spülschritt 305 entfernt. In Schritt 306 wird das zu dem Markerenzym passende Enzymsubstrat in die Filtrationsmesszelle eingebracht und inkubiert. Bei Anwesenheit enzymmarkierter Antikörper auf der Filteroberfläche wird durch Umsetzung des Enzymsubstrats Licht erzeugt, das in Schritt 307 direkt an der Filteroberfläche detektiert wird. In dem abschließenden Schritt 308 wird die Zelle gespült und dekontaminiert.

Die Zeit für einen solchen Test beträgt in Abhängigkeit von der Konzentration der immunogenen Partikel in der Probe und der daraus resultierenden erforderlichen Anreicherungszeit zwischen 10 Minuten und wenigen Stunden. Damit liegt die Testdauer zum Teil wesentlich unter der Zeit, die ein herkömmlicher Immuntest ohne Anreicherungsschritt dauert.

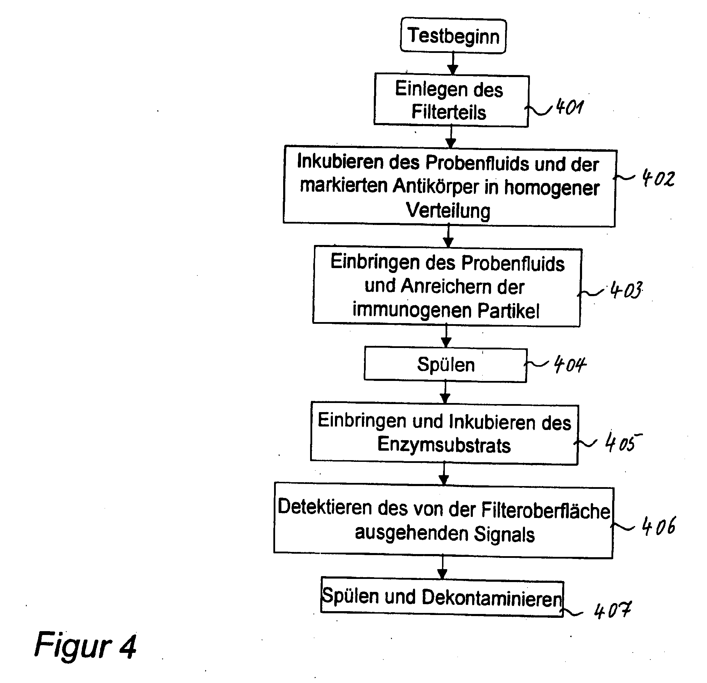

Eine zweite Testvariante, bei der die Testzeiten weiter reduziert werden können, ist in Figur 4 dargestellt. Bei diesem Test erfolgt die Markierung der immunogenen Partikel mit dem spezifischen enzymmarkierten Antikörper vor dem Anreicherungsschritt in homogener Verteilung direkt im Probenfluid (Schritt 402). Anschließend wird in Schritt 403 das Probenfluid in die Filtrationsmesszelle eingebracht und die markierten immunogenen Partikel beim senkrechten Durchströmen des Filterteils angereichert. Nicht gebundene Komponenten werden im Spülschritt 404 entfernt. In Schritt 405 wird das durch das Markerenzym umsetzbare Enzymsubstrat in die Filtrationsmesszelle eingebracht und inkubiert. Das von der Filteroberfläche ausgehende Signal wird in Schritt 406 detektiert. Ein abschließender Spül- und Dekontaminationsschritt 407 beendet den Test.

Neben der Auswertung des immunologischen Nachweises über die Chemilumineszenz kann auch eine Fluoreszenzmessung verwendet werden. Hierzu wird entweder einer geeignete Fluoreszenzsubstratlösung enzymatisch umgesetzt oder es werden die immunogenen Partikel mit einem Antikörper, an den ein Fluoreszenzfarbstoffmolekül gekoppelt ist, markiert. Anstelle eines Fotodetektors wird in diesem Fall ein geeigneter Fluoreszenzmesskopf an dem lichtdurchlässigen Fenster angeordnet.

## Patentansprüche

1. Vorrichtung zum Erfassen immunogener Partikel in einem Probenfluid mit
einer Filtrationsmesszelle (102), in deren Innerem ein Filterteil (104) zum Zurückhalten der immunogenen Partikel (112) angeordnet ist, und mit
einem Sensorelement (108) zum Empfangen eines spezifisch durch im Filtermaterial befindliche immunogene Partikel erzeugten Signals (118),
wobei die Filtrationsmesszelle (102) zumindest teilweise durchlässig für das Signal (118) ist und dass das Sensorelement (108) so angeordnet ist, dass es sich nahe dem Filterteil (104) befindet und das erzeugte Signal (118) empfängt,
**dadurch gekennzeichnet,**
**dass** das Signal (118) eine Lichtstrahlung ist und die Filtrationsmesszelle (102) zumindest teilweise lichtdurchlässig ist.

2. Vorrichtung nach Anspruch 1, **dadurch gekennzeichnet, dass** das Sensorelement (108) ein Fotodetektor ist.

3. Vorrichtung nach einem der Ansprüche 1 oder 2, **dadurch gekennzeichnet, dass** die Porengröße des Filterteils (104) kleiner ist als der Durchmesser der nachzuweisenden immunogenen Partikel (112).

4. Vorrichtung nach einem der Ansprüche 1 bis 3, **dadurch gekennzeichnet, dass** die Filtrationsmesszelle (102) eine im wesentlichen zylindrische Form besitzt.

5. Vorrichtung nach einem der Ansprüche 1 bis 4, **dadurch gekennzeichnet, dass** die Filtrationsmesszelle (102) ein Bodenteil, ein Deckelteil und eine sich im wesentlichen senkrecht zwischen Bodenteil und Deckelteil erstreckende Wandung aufweist.

6. Vorrichtung nach Anspruch 5, **dadurch gekennzeichnet, dass** Deckelteil und Wandung einstückig ausgeführt sind.

7. Vorrichtung nach einem der Ansprüche 1 bis 6, **dadurch gekennzeichnet, dass** die Filtrationsmesszelle (102) zumindest teilweise aus Polymethylmethacrylat (PMMA) gefertigt ist.

8. Vorrichtung nach einem der Ansprüche 1 bis 7, **dadurch gekennzeichnet, dass** die Filtrationsmesszelle (102) mindestens einen Fluid-Ein- und/oder Auslass (134, 136, 138) aufweist.

9. Vorrichtung nach Anspruch 8, **dadurch gekennzeichnet, dass** der Fluid-Ein- und/oder Auslass (134, 136) so angeordnet ist, dass das Fluid im wesentlichen tangential an der Filterteiloberfläche vorbeiströmt.

10. Vorrichtung nach Anspruch 8 oder 9, **dadurch gekennzeichnet, dass** ein Fluid-Auslass (138) unter dem Filterteil (104) angeordnet ist, so dass das Fluid im wesentlichen senkrecht durch das Filterteil hindurchströmt.

11. Vorrichtung nach einem der Ansprüche 5 bis 10, **dadurch gekennzeichnet, dass** das Bodenteil (140) durch eine in einem Gehäuse gehaltene Filterfritte gebildet ist.

12. Vorrichtung nach einem der Ansprüche 1 bis 11, **dadurch gekennzeichnet, dass** das Probenfluid eine wässrige Lösung ist.

13. Vorrichtung nach einem der Ansprüche 1 bis 12, **dadurch gekennzeichnet, dass** das Probenfluid ein Gas ist.

14. Verfahren zum Nachweis immunogener Partikel in einem Probenfluid mittels einer Filtrationsmesszelle, in deren Innerem ein Filterteil zum Zurückhalten der immunogenen Partikel angeordnet ist, und mittels eines Sensorelements zum Empfangen einer spezifisch durch im Filtermaterial befindliche immunogene Partikel erzeugten Lichtstrahlung, wobei die Filtrationsmesszelle zumindest teilweise lichtdurchlässig ist und das Sensorelement so angeordnet ist, dass es sich nahe dem Filterteil befindet und die erzeugte Lichtstrahlung empfängt, und wobei das Verfahren die folgenden Schritte aufweist:
(a) Einlegen des Filterteils,
(b) Einbringen des Probenfluids in die Filtrationsmesszelle und Anreichern der immunogenen Partikel,
(c) Einbringen und Inkubieren von spezifischen, mit einer Lichtstrahlung erzeugenden Substanz markierten Antikörpern in der Filtrationsmesszelle,
(d) Detektieren der von der Filterteiloberfläche ausgehenden Lichtstrahlung in der Nähe des Filterteils.

15. Verfahren nach Anspruch 14, **gekennzeichnet durch** folgenden Verfahrensschritt:
Spülen der Filtrationsmesszelle nach Schritt (b).

16. Verfahren nach Anspruch 14 oder 15, **gekennzeichnet durch** folgenden Verfahrensschritt:
Spülen der Filtrationsmesszelle nach Schritt (c).

17. Verfahren nach einem der Ansprüche 14 bis 16, **dadurch gekennzeichnet, dass** die lichterzeugende Substanz ein Enzym ist und das Verfahren vor dem Schritt (d) weiterhin den Schritt aufweist:
Einbringen und Inkubieren einer Substrat-Lösung.

18. Verfahren nach Anspruch 17, **dadurch gekennzeichnet, dass** das Enzymsubstrat ein Chemilumineszenz-Substrat ist, das bei Anwesenheit des Enzyms Chemilumineszenz-Licht abstrahlt und dass Schritt (d) die Detektion des abgestrahlten Chemilumineszenz-Lichts beinhaltet.

19. Verfahren nach Anspruch 17, **dadurch gekennzeichnet, dass** das Enzymsubstrat ein Fluoreszenz-Substrat ist, das bei Anwesenheit des Enzyms Fluoreszenz-Licht abstrahlt und dass Schritt (d) die Detektion des abgestrahlten Fluoreszenz-Lichts beinhaltet.

20. Verfahren nach einem der Ansprüche 14 bis 16, **dadurch gekennzeichnet, dass** die lichterzeugende Substanz eine fluoreszierende Substanz ist und dass Schritt (d) die Detektion des abgestrahlten Fluoreszenz-Lichts beinhaltet.

21. Verfahren nach einem der Ansprüche 14 bis 20, **dadurch gekennzeichnet, dass** das Probenfluid eine wässrige Lösung ist.

22. Verfahren nach einem der Ansprüche 14 bis 21, **gekennzeichnet durch** die folgenden weiteren Verfahrensschritte:
(e) Spülen der Filtrationsmesszelle nach Schritt (d),
(f) Dekontamination der Filtrationsmesszelle.

23. Verfahren zum Nachweis immunogener Partikel in einem Probenfluid mittels einer Filtrationsmesszelle, in deren Innerem ein Filterteil zum Zurückhalten der immunogenen Partikel angeordnet ist, und mittels eines Sensorelements zum Empfangen einer spezifisch durch im Filtermaterial befindliche immunogene Partikel erzeugten Lichtstrahlung, wobei die Filtrationsmesszelle zumindest teilweise lichtdurchlässig ist und das Sensorelement so angeordnet ist, dass es sich nahe dem Filterteil befindet und die erzeugte Lichtstrahlung empfängt, und wobei das Verfahren die folgenden Schritte aufweist:
(a) Einlegen des Filterteils,
(b) Inkubieren von spezifischen, mit einer Lichtstrahlung erzeugenden Substanz markierten Antikörpern und des Probenfluids in homogener Verteilung,
(c) Einbringen des markierten Probenfluids in die Filtrationsmesszelle und Anreichern der immunogenen Partikel,
(d) Detektieren der von der Filterteiloberfläche ausgehenden Lichtstrahlung in der Nähe des Filterteils.

24. Verfahren nach Anspruch 23, **gekennzeichnet durch** folgenden Verfahrensschritt:
Spülen der Filtrationsmesszelle nach Schritt (c).

25. Verfahren nach einem der Ansprüche 23 oder 24, **dadurch gekennzeichnet, dass** die lichterzeugende Substanz ein Enzym ist und das Verfahren vor dem Schritt (d) weiterhin den Schritt aufweist:
Einbringen und Inkubieren einer Enzymsubstrat-Lösung.

26. Verfahren nach Anspruch 25, **dadurch gekennzeichnet, dass** das Enzymsubstrat ein Chemilumineszenz-Substrat ist, das bei Anwesenheit des Enzyms Chemilumineszenz-Licht abstrahlt und dass Schritt (d) die Detektion des abgestrahlten Chemilumineszenz-Lichts beinhaltet.

27. Verfahren nach Anspruch 25, **dadurch gekennzeichnet, dass** das Enzymsubstrat ein Fluoreszenz-Substrat ist, das bei Anwesenheit des Enzyms Fluoreszenz-Licht abstrahlt und dass Schritt (d) die Detektion des abgestrahlten Fluoreszenz-Lichts beinhaltet.

28. Verfahren nach einem der Ansprüche 23 oder 24, **dadurch gekennzeichnet, dass** die lichterzeugende Substanz eine fluoreszierende Substanz ist und dass Schritt (d) die Detektion des abgestrahlten Fluoreszenz-Lichts beinhaltet.

29. Verfahren nach einem der Ansprüche 23 bis 28, **dadurch gekennzeichnet, dass** das Probenfluid eine wässrige Lösung ist.

30. Verfahren nach einem der Ansprüche 23 bis 28, **dadurch gekennzeichnet, dass** das Probenfluid ein Gas ist.

31. Verfahren nach einem der Ansprüche 23 bis 30, **gekennzeichnet durch** die folgenden weiteren Verfahrensschritte:
(g) Spülen der Filtrationsmesszelle nach Schritt (d),
(h) Dekontamination der Filtrationsmesszelle.

32. Durchflussanalysensystem zum Erfassen immunogener Partikel, das eine Vorrichtung zum Erfassen immunogener Partikel nach einem der Ansprüche 1 bis 13 aufweist und ferner folgende Merkmale umfasst:
mindestens eine Peristaltikpumpe (120, 122) zum Fördern des Fluids durch die Filtrationsmesszelle (102),
mindestens ein Ventil (126) zum Auswählen bestimmter Fluidförderwege,
einen Fluidverteiler (124),
eine Messdatenauswertungseinrichtung, die eine Konzentration von immunogenen Partikeln aus dem erfassten Signal des Sensorelements (108) bestimmt,
eine Systemsteuerungseinrichtung, welche die Peristaltikpumpe (120, 122) und das Ventil (126) entsprechend einstellbarer Parameter steuert.

33. System nach Anspruch 32, das ferner eine Dateneingabeeinrichtung (130) und eine Datenanzeigeeinrichtung (132) umfasst,
wobei die Dateneingabeeinrichtung (130) die Eingabe von Steuerparametem ermöglicht, wobei diese sowohl Parameter für die Systemsteuerungseinrichtung als auch Parameter für die Messdatenauswertungseinrichtung umfassen,
und wobei die Datenanzeigeeinrichtung (132) eingestellte Systemparameter und erfasste und verarbeitete Messwerte anzeigt.

## Claims

1. Apparatus for capturing immunogenic particles in a sample fluid, having
a filtration measuring cell (102) inside which is positioned a filter section (104) for retaining the immunogenic particles (112), and having
a sensor element (108) for receiving a signal (118) generated specifically by immunogenic particles located in the filter material,
the filtration measuring cell (102) being at least partly permeable for the signal (118) and the sensor element (108) being positioned in such a way that it is close to the filter section (104) and receives the generated signal (118),
**characterised in that**
the signal (118) is a light ray and the filtration measuring cell (102) is at least partly transparent.

2. Apparatus according to claim 1, **characterised in that** the sensor element (108) is a photodetector.

3. Apparatus according to one of claims 1 or 2, **characterised in that** the pore size of the filter section (104) is smaller than the diameter of the immunogenic particles (112) to be detected.

4. Apparatus according to one of claims 1 to 3, **characterised in that** the filtration measuring cell (102) has a substantially cylindrical shape.

5. Apparatus according to one of claims 1 to 4, **characterised in that** the filtration measuring cell (102) has a base section, a top section and a wall extending substantially vertically between the base section and the top section.

6. Apparatus according to claim 5, **characterised in that** the top section and the wall are executed as one piece.

7. Apparatus according to one of claims 1 to 6, **characterised in that** the filtration measuring cell (102) is manufactured at least partly from polymethyl methacrylate (PMMA).

8. Apparatus according to one of claims 1 to 7, **characterised in that** the filtration measuring cell (102) has at least one fluid inlet and/or outlet (134, 136, 138).

9. Apparatus according to claim 8, **characterised in that** the fluid inlet and/or outlet (134, 136) is positioned such that the fluid flows substantially tangentially past the surface of the filter section.

10. Apparatus according to claim 8 or 9, **characterised in that** a fluid outlet (138) is positioned below the filter section (104) such that the fluid flows substantially vertically through the filter section.

11. Apparatus according to one of claims 5 to 10, **characterised in that** the base section (140) is formed by a filter frit held in a housing.

12. Apparatus according to one of claims 1 to 11, **characterised in that** the sample fluid is an aqueous solution.

13. Apparatus according to one of claims 1 to 12, **characterised in that** the sample fluid is a gas.

14. Method for detecting immunogenic particles in a sample fluid by means of a filtration measuring cell, inside which is positioned a filter section for retaining the immunogenic particles, and by means of a sensor element for receiving a light ray generated specifically by immunogenic particles located in the filter material, the filtration measuring cell being at least partly transparent and the sensor element being positioned such that it is located close to the filter section and receives the generated light ray, and wherein the method includes the following steps:
(a) insertion of the filter section,
(b) introduction of the sample fluid into the filtration measuring cell and accumulation of the immunogenic particles,
(c) introduction and incubation in the filtration measuring cell of specific antibodies marked with a light ray-generating substance,
(d) detection of the light ray emitted from the surface of the filter section close to the filter section.

15. Method according to claim 14, **characterised by** the following process step:
rinsing of the filtration measuring cell after step (b).

16. Method according to claim 14 or 15, **characterised by** the following process step:
rinsing of the filtration measuring cell after step (c).

17. Method according to one of claims 14 to 16, **characterised in that** the light-generating substance is an enzyme and ahead of step (d) the method additionally includes the step:
introduction and incubation of a substrate solution.

18. Method according to claim 17, **characterised in that** the enzyme substrate is a chemiluminescent substrate which emits chemiluminescent light in the presence of the enzyme and step (d) includes detection of the emitted chemiluminescent light.

19. Method according to claim 17, **characterised in that** the enzyme substrate is a fluorescent substrate which emits fluorescent light in the presence of the enzyme and step (d) includes detection of the emitted fluorescent light.

20. Method according to one of claims 14 to 16, **characterised in that** the light-generating substance is a fluorescent substance and step (d) includes detection of the emitted fluorescent light.

21. Method according to one of claims 14 to 20, **characterised in that** the sample fluid is an aqueous solution.

22. Method according to one of claims 14 to 21, **characterised by** the following further process steps:
(e) rinsing of the filtration measuring cell after step (d),
(f) decontamination of the filtration measuring cell.

23. Method for detecting immunogenic particles in a sample fluid by means of a filtration measuring cell, inside which is positioned a filter section for retaining the immunogenic particles, and by means of a sensor element for receiving a light ray generated specifically by immunogenic particles located in the filter material, the filtration measuring cell being at least partly transparent and the sensor element being positioned such that it is located close to the filter section and receives the generated light ray, and wherein the method includes the following steps:
(a) insertion of the filter section,
(b) incubation of specific antibodies marked with a light ray-generating substance and the sample fluid in a homogeneous distribution,
(c) introduction of the marked sample fluid into the filtration measuring cell and accumulation of the immunogenic particles,
(d) detection of the light ray emitted from the surface of the filter section close to the filter section.

24. Method according to claim 23, **characterised by** the following process step:
rinsing of the filtration measuring cell after step (c).

25. Method according to one of claims 23 or 24, **characterised in that** the light-generating substance is an enzyme and ahead of step (d) the method additionally includes the step:
introduction and incubation of an enzyme substrate solution.

26. Method according to claim 25, **characterised in that** the enzyme substrate is a chemiluminescent substrate which emits chemiluminescent light in the presence of the enzyme and step (d) includes detection of the emitted chemiluminescent light.

27. Method according to claim 25, **characterised in that** the enzyme substrate is a fluorescent substrate which emits fluorescent light in the presence of the enzyme and step (d) includes detection of the emitted fluorescent light.

28. Method according to one of claims 23 or 24, **characterised in that** the light-generating substance is a fluorescent substance and step (d) includes detection of the emitted fluorescent light.

29. Method according to one of claims 23 to 28, **characterised in that** the sample fluid is an aqueous solution.

30. Method according to one of claims 23 to 28, **characterised in that** the sample fluid is a gas.

31. Method according to one of claims 23 to 30, **characterised by** the following further process steps:
(g) rinsing of the filtration measuring cell after step (d),
(h) decontamination of the filtration measuring cell.

32. Flow analysis system for capturing immunogenic particles, which includes an apparatus for capturing immunogenic particles according to one of claims 1 to 13 and in addition comprises the following features:
at least one peristaltic pump (120, 122) for transporting the fluid through the filtration measuring cell (102),
at least one valve (126) for selecting specific fluid transport routes,
a fluid distributor (124),
a measured data evaluation unit, which determines a concentration of immunogenic particles from the captured signal from the sensor element (108),
a system control unit, which controls the peristaltic pump (120, 122) and the valve (126) in accordance with definable parameters.

33. System according to claim 32, which further comprises a data input unit (130) and a data display unit (132), wherein the data input unit (130) allows the input of control parameters, said parameters including both parameters for the system control unit and parameters for the measured data evaluation unit,
and wherein the data display unit (132) displays defined system parameters and captured and processed measured values.

## Revendications

1. Dispositif pour capter des particules immunogènes dans un fluide échantillon, avec une cellule filtrante de mesure (102), à l'intérieur de laquelle est disposé un élément filtrant (104) pour retenir les particules immunogènes (112), et avec
un élément capteur (108) pour la réception d'un signal (118) produit spécifiquement par les particules immunogènes se trouvant dans le matériau filtrant,
dans lequel la cellule filtrante de mesure (102) est au moins partiellement perméable au signal (118) et l'élément capteur (108) est disposé de telle sorte qu'il se trouve proche de l'élément filtrant (104) et reçoit le signal (118) produit,
**caractérisé en ce que**
le signal (118) est un rayonnement lumineux et **en ce que** la cellule filtrante de mesure (102) est au moins partiellement translucide.

2. Dispositif selon la revendication 1, **caractérisé en ce que** l'élément capteur (108) est un photodétecteur.

3. Dispositif selon l'une quelconque des revendications 1 ou 2, **caractérisé en ce que** la taille des pores de l'élément filtrant (104) est plus petite que le diamètre des particules immunogènes (112) à détecter.

4. Dispositif selon l'une quelconque des revendications 1 à 3, **caractérisé en ce que** la cellule filtrante de mesure (102) possède une forme sensiblement cylindrique.

5. Dispositif selon l'une quelconque des revendications 1 à 4, **caractérisé en ce que** la cellule filtrante de mesure (102) comporte une partie de fond, une partie de couvercle et une paroi s'étendant sensiblement verticalement entre la partie de fond et la partie de couvercle.

6. Dispositif selon la revendication 5, **caractérisé en ce que** la partie de fond et la partie de couvercle sont exécutées en une pièce.

7. Dispositif selon l'une quelconque des revendications 1 à 6, **caractérisé en ce que** la cellule filtrante de mesure (102) est fabriquée au moins partiellement en polyméthacrylate de méthyle (PMMA).

8. Dispositif selon l'une quelconque des revendications 1 à 7, **caractérisé en ce que** la cellule filtrante de mesure (102) comporte au moins une entrée et/ou une sortie de fluide (134, 136, 138).

9. Dispositif selon la revendication 8, **caractérisé en ce que** l'entrée et/ou la sortie de fluide (134, 136) sont disposées de telle sorte que le fluide s'écoule sensiblement tangentiellement par rapport à la surface de l'élément filtrant.

10. Dispositif selon la revendication 8 ou 9, **caractérisé en ce qu'**une sortie du fluide (138) est disposée sous l'élément filtrant (104), de telle sorte que le fluide s'écoule sensiblement verticalement à travers l'élément filtrant.

11. Dispositif selon l'une quelconque des revendications 5 à 10, **caractérisé en ce que** la partie de fond (140) est formée d'une fritte filtrante maintenue dans un boîtier.

12. Dispositif selon l'une quelconque des revendications 1 à 11, **caractérisé en ce que** le fluide échantillon est une solution aqueuse.

13. Dispositif selon l'une quelconque des revendications 1 à 12, **caractérisé en ce que** le fluide échantillon est un gaz.

14. Procédé pour capter des particules immunogènes dans un fluide échantillon au moyen d'une cellule filtrante de mesure, à l'intérieur de laquelle est disposé un élément filtrant pour retenir les particules immunogènes, et au moyen d'un élément capteur pour la réception d'un rayonnement lumineux produit spécifiquement par des particules immunogènes se trouvant dans le matériau filtrant, dans lequel la cellule filtrante de mesure est au moins partiellement translucide et l'élément capteur est disposé de telle sorte qu'il se trouve proche de l'élément filtrant et reçoit le rayonnement lumineux produit, et dans lequel le procédé comporte les étapes suivantes :
(a) Mise en place de l'élément filtrant,
(b) Introduction du fluide échantillon dans la cellule filtrante de mesure et enrichissement en particules immunogènes,
(c) Introduction et incubation dans la cellule filtrante de mesure d'anticorps spécifiques marqués par une substance produisant un rayonnement lumineux,
(d) Détection du rayonnement lumineux provenant de la surface de l'élément filtrant à proximité de l'élément filtrant.

15. Procédé selon la revendication 14, **caractérisé par** l'étape de procédé suivante :
Rinçage de la cellule filtrante de mesure après l'étape (b).

16. Procédé selon la revendication 14 ou 15, **caractérisé par** l'étape de procédé suivants :
Rinçage de la cellule filtrante de mesure après l'étape (c).

17. Procédé selon l'une quelconque des revendications 14 à 16, **caractérisé en ce que** la substance photogène est un enzyme et que le procédé comporte en outre avant l'étape (d) l'étape :
Introduction et incubation d'une solution substrat.

18. Procédé selon la revendication 17, **caractérisé en ce que** le substrat enzymatique est un substrat de chimiluminescence qui, en présence de l'enzyme, émet de la lumière par chimiluminescence, et **en ce que** l'étape (d) inclut la détection de la lumière émise par chimiluminescence.

19. Procédé selon la revendication 17, **caractérisé en ce que** le substrat enzymatique est un substrat de fluorescence qui, en présence de l'enzyme, émet de la lumière par fluorescence, et **en ce que** l'étape (d) inclut la détection de la lumière émise par fluorescence.

20. Procédé selon l'une quelconque des revendications 14 à 16, **caractérisé en ce que** la substance photogène est une substance fluorescente et **en ce que** l'étape (d) inclut la détection de la lumière émise par fluorescence.

21. Procédé selon l'une quelconque des revendications 14 à 20, **caractérisé en ce que** le fluide échantillon est une solution aqueuse.

22. Procédé selon l'une quelconque des revendications 14 à 21, **caractérisé par** les étapes supplémentaires suivantes :
(e) Rinçage de la cellule filtrante de mesure après l'étape (d),
(f) Décontamination de la cellule filtrante de mesure.

23. Procédé pour capter des particules immunogènes dans un fluide échantillon au moyen d'une cellule filtrante de mesure, à l'intérieur de laquelle est disposé un élément filtrant pour retenir les particules immunogènes, et au moyen d'un élément capteur pour la réception d'un rayonnement lumineux produit spécifiquement par des particules immunogènes se trouvant dans le matériau filtrant, dans lequel la cellule filtrante de mesure est au moins partiellement translucide et l'élément capteur est disposé de telle sorte qu'il se trouve proche de l'élément filtrant et reçoit le rayonnement lumineux produit, et dans lequel le procédé comporte les étapes suivantes :
(a) Mise en place de l'élément filtrant,
(b) incubation d'anticorps spécifiques, marqués avec une substance produisant un rayonnement lumineux, et du fluide échantillon en répartition homogène,
(c) Introduction du fluide échantillon marqué dans la cellule filtrante de mesure et enrichissement en particules immunogènes,
(d) Détection à proximité de l'élément filtrant du rayonnement lumineux provenant de la surface de l'élément filtrant.

24. Procédé selon la revendication 23, **caractérisé par** l'étape de procédé suivants :
Rinçage de la cellule filtrante de mesure après l'étape (c).

25. Procédé selon l'une quelconque des revendications 23 ou 24, **caractérisé en ce que** la substance photogène est un enzyme et **en ce que** le procédé comporte en outre avant l'étape (d) l'étape :
Introduction et incubation d'une solution de substrat enzymatique.

26. Procédé selon la revendication 25, **caractérisé en ce que** le substrat enzymatique est un substrat de chimiluminescence qui, en présence de l'enzyme, émet de la lumière par chimiluminescence, et **en ce que** l'étape (d) inclut la détection de la lumière émise par chimiluminescence.

27. Procédé selon la revendication 25, **caractérisé en ce que** le substrat enzymatique est un substrat de fluorescence qui, en présence de l'enzyme, émet de la lumière par fluorescence, et **en ce que** l'étape (d) inclut la détection de la lumière émise par fluorescence.

28. Procédé selon l'une quelconque des revendications 23 ou 24, **caractérisé en ce que** la substance photogène est une substance fluorescente et **en ce que** l'étape (d) inclut la détection de la lumière émise par fluorescence.

29. Procédé selon l'une quelconque des revendications 23 à 28, **caractérisé en ce que** le fluide échantillon est une solution aqueuse.

30. Procédé selon l'une quelconque des revendications 23 à 28, **caractérisé en ce que** le fluide échantillon est un gaz.

31. Procédé selon l'une quelconque des revendications 23 à 30, **caractérisé par** les étapes supplémentaires suivantes :
(g) Rinçage de la cellule filtrante de mesure après l'étape (d),
(h) Décontamination de la cellule filtrante de mesure.

32. Système d'analyse à écoulement continu pour capter des particules immunogènes, qui comporte un dispositif pour capter des particules immunogènes selon l'une quelconque des revendications 1 à 13 et comprend en outre les caractéristiques suivantes :
au moins un pompe péristaltique (120, 122) pour le transport du fluide à travers la cellule filtrante de mesure (102),
au moins une vanne (126) pour la sélection de voies déterminées de transport du fluide,
un distributeur de fluide (124),
un dispositif d'évaluation de données de mesure qui détermine une concentration de particules immunogènes à partir du signal saisi par l'élément capteur (108),
un dispositif de commande du système, lequel commande la pompe péristaltique (120, 122) et la vanne (126) en fonction de paramètres ajustables.

33. Système selon la revendication 32, qui comprend en outre un dispositif d'entrée de données (130) et un dispositif d'affichage des données (132), dans lequel le dispositif d'entrée de données (130) permet l'entrée de paramètres de commande, ceux-ci comprenant aussi bien les paramètres pour le dispositif de commande du système que les paramètres pour le dispositif d'évaluation de données de mesure,
et dans lequel le dispositif d'affichage des données (132) affiche les paramètres du système réglés et les valeurs de mesure saisies et traitées.
